# EUROPEAN PATENT APPLICATION

(11) **EP 4 822 296 A1**
(43) Date of publication of application: **14.10.2026**
(21) Application number: 24906514.5
(22) Date of filing: 20.12.2024
(51) Int. Cl.: G01C 21/20, G01S 17/88, G01S 17/06

(54) **ROBOT PARKING METHOD AND APPARATUS, DEVICE, AND READABLE STORAGE MEDIUM**

(30) Priority: 20.12.2023 CN 202311756409
(71) Applicant: Nuctech Company Limited, TongFang Building Shuangqinglu Haidian District Beijing 100084 (CN); Tsinghua University, Beijing 100084 (CN)
(72) Inventor: CHEN, Zhiqiang, Beijing 100084 (CN); CUI, Jin, Beijing 100084 (CN); ZHANG, Yuzhe, Beijing 100084 (CN); PENG, Zhi, Beijing 100084 (CN); ZHAO, Yanping, Beijing 100084 (CN); LI, Hongtao, Beijing 100084 (CN)
(74) Representative: Cabinet Beau de Loménie
(86) International application number: PCT/CN2024/140907
(87) International publication number: WO 2025/131040

(57) **Abstract**

A robot parking method and apparatus, a device, and a readable storage medium. The robot parking method comprises: in a work start area, obtaining first laser radar data of the surrounding environment around a robot by means of a laser radar on the robot (S201); according to the first laser radar data, determining first coordinate information of the robot in a first coordinate system (S202); obtaining second coordinate information of a first marker, which is in a parking area, in the first coordinate system (S203); according to a first relative position relationship between the first coordinate information and the second coordinate information, determining third coordinate information of the first marker in a second coordinate system in which the laser radar is located (S204); according to the third coordinate information, generating a first movement path for the robot (S205); and moving along the first movement path from the work start area to the parking area (S206).

## Description

### CROSS-REFERENCE TO RELATED APPLICATIONS

This application claims priority to Chinese patent application No. 202311756409.1, entitled "ROBOT DOCKING METHOD, APPARATUS, DEVICE, AND READABLE STORAGE MEDIUM", filed on December 20, 2023, the entire contents of which are incorporated herein by reference.

### TECHNICAL FIELD

This application relates to the field of path navigation, and particularly relates to a robot docking method, apparatus, device, and readable storage medium.

### BACKGROUND

Currently, there are mainly three implementation schemes for guiding a robot to automatically leave a docking area to perform work and automatically return to the docking area. A first scheme involves personnel manually remote controlling the robot to leave the docking area to perform work and manually remote controlling the robot to return to the docking area. A second scheme utilizes a camera to recognize markers and guide the robot for autonomous docking. A third scheme realizes autonomous docking by drawing lines on the road surface or attaching quick response (QR) codes to allow the robot to move along the lines or QR codes (Automated Guided Vehicle (AGV) mode).

However, the manual remote control method in the first scheme consumes a large amount of manpower, suffers from low efficiency and poor accuracy, and exhibits a low degree of automation. In the second scheme, utilizing a camera to recognize markers results in low outdoor accuracy because the camera struggles to clearly identify markers under high-light (direct sunlight) or low-light environments. In the third scheme, the method of drawing lines or attaching QR codes on the ground lacks adaptability, requiring the robot to travel strictly along predetermined routes and necessitating advance operations such as ground painting or code attachment, which is inconvenient.

### SUMMARY

Embodiments of the present application provide a robot docking method, apparatus, device, and readable storage medium, capable of automatically and accurately moving the robot to a docking area without being limited by lighting conditions.

In a first aspect, embodiments of the present application provide a robot docking method. The method includes: acquiring, in a work starting area, first laser radar data of an environment surrounding a robot by a laser radar on the robot; determining first coordinate information of the robot in a first coordinate system based on the first laser radar data; acquiring second coordinate information of a first marker in a docking area in the first coordinate system; determining third coordinate information of the first marker in a second coordinate system where the laser radar is located based on a first relative positional relationship between the first coordinate information and the second coordinate information; generating a first movement path of the robot based on the third coordinate information; and moving from the work starting area to the docking area along the first movement path.

According to an embodiment of the first aspect, the moving from the work starting area to the docking area along the first movement path includes: moving along the first movement path from the work starting area, and scanning, during the moving along the first movement path from the work starting area, the environment surrounding the robot in real time by the laser radar to obtain continuously updated second laser radar data; determining, based on the second laser radar data and the second coordinate information, real-time coordinate information of the first marker in the second coordinate system where the laser radar is located;
adjusting the first movement path based on the real-time coordinate information to obtain a real-time second movement path; and moving to the docking area along the second movement path.

According to any one of the foregoing embodiments of the first aspect, the real-time coordinate information comprises an angle between a heading direction of the robot and a first coordinate axis of the first coordinate system, and after the moving from the work starting area to the docking area along the first movement path, the method further comprises: scanning the first marker by the laser radar to determine whether the docking area is reached; and adjusting, in a case where it is determined that the docking area is reached, the heading direction of the robot based on the real-time coordinate information.

According to any one of the foregoing embodiments of the first aspect, the first marker has laser reflectivity, and a shape, a size, and a height of the first marker are adapted to a site of the docking area.

According to any one of the foregoing embodiments of the first aspect, the robot is provided with an optical camera, the first marker has a color and/or a pattern facilitating recognition by the optical camera, and the scanning the first marker in the docking area by the laser radar to determine whether a target docking area is reached comprises: scanning the first marker in the docking area by the laser radar to obtain data information of the first marker; determining whether the first marker is a target marker based on the data information and a recognition result of the optical camera; and determining whether the docking area is reached based on the determination result.

According to any one of the foregoing embodiments of the first aspect, before the acquiring the first laser radar data of the environment surrounding the robot by the laser radar on the robot in the work starting area, the method further comprises: establishing the first coordinate system, wherein the first coordinate system comprises a spatial coordinate origin and spatial coordinate axes, and the spatial coordinate axes comprise a first coordinate axis and a second coordinate axis; inputting the second coordinate information, fourth coordinate information of the docking area in the first coordinate system, and fifth coordinate information of the work starting area in the first coordinate system into the first coordinate system; obtaining a third movement path based on the fourth coordinate information, the fifth coordinate information and real-time odometry calculation; and moving from the docking area to the work starting area along the third movement path.

According to any one of the foregoing embodiments of the first aspect, the work starting area is provided with a second marker, and after the moving from the docking area to the work starting area along the third movement path, the method further comprises: scanning the second marker by the laser radar to determine whether the work starting area is reached; acquiring, in a case where it is determined that the work starting area is reached, sixth coordinate information of the robot in the first coordinate system, wherein the sixth coordinate information comprises an angle between the heading direction of the robot and the first coordinate axis; and adjusting the heading direction of the robot based on the sixth coordinate information.

In a second aspect, embodiments of the present application provide a robot docking apparatus. The apparatus includes: a first acquisition module configured to acquire, in a work starting area, first laser radar data of an environment surrounding a robot by a laser radar on the robot; a first determination module configured to determine first coordinate information of the robot in a first coordinate system based on the first laser radar data; a second acquisition module configured to acquire second coordinate information of a first marker in a docking area in the first coordinate system; a second determination module configured to determine third coordinate information of the first marker in a second coordinate system where the laser radar is located based on a first relative positional relationship between the first coordinate information and the second coordinate information; a generation module configured to generate a first movement path of the robot based on the third coordinate information; and a movement module configured to move from the work starting area to the docking area along the first movement path.

In a third aspect, embodiments of the present application provide an electronic device. The electronic device includes: a processor; and a memory storing computer program instructions thereon; the processor executes the computer program instructions to implement the robot docking method according to the first aspect.

In a fourth aspect, embodiments of the present application provide a computer-readable storage medium. The computer-readable storage medium stores computer program instructions thereon, the computer program instructions, when executed by a processor, cause the processor to implement the robot docking method according to the first aspect.

The robot docking method, apparatus, device, and readable storage medium of the embodiments of the present application utilize a laser radar disposed on the robot to scan the environment surrounding the robot in a work starting area, thereby determining first coordinate information of the robot in a first coordinate system. Since second coordinate information of a first marker in a docking area in the first coordinate system is known, a first relative positional relationship between the laser radar and the first marker can be used to convert first coordinate information of the first marker into third coordinate information with the laser radar as a coordinate origin, thereby generating a first movement path from the coordinate origin to the laser radar. The robot can move along the movement path to move from the current work starting area to the docking area. This enables the robot to move to the docking area automatically and accurately without being limited by lighting conditions.

### BRIEF DESCRIPTION OF THE DRAWINGS

To explain the technical solutions in the embodiments of the present application more clearly, the following briefly introduces the accompanying drawings required for describing the embodiments. It is apparent that the accompanying drawings in the following description merely show some embodiments of the present application, and a person of ordinary skill in the art may still derive other drawings from these accompanying drawings without creative efforts.
FIG. 1 is a schematic diagram of a robot movement area according to an embodiment of the present application;
FIG. 2 is a flowchart of a robot docking method according to an embodiment of the present application;
FIG. 3 is a flowchart of a robot docking method according to another embodiment of the present application;
FIG. 4 is a structural schematic diagram of a first marker according to an embodiment of the present application;
FIG. 5 is a flowchart of a robot docking method according to yet another embodiment of the present application;
FIG. 6 is a structural schematic diagram of a robot docking apparatus according to an embodiment of the present application; and
FIG. 7 is a structural schematic diagram of an electronic device according to an embodiment of the present application.

### DETAILED DESCRIPTION

The following describes in detail features and exemplary embodiments of various aspects of the present application. To make the objectives, technical solutions, and advantages of the present application clearer, the following specifically describes the present application in combination with the accompanying drawings and specific embodiments. It should be understood that the specific embodiments described herein are merely intended to explain the present application, rather than limiting the present application. For those skilled in the art, the present application may be implemented without some of the specific details. The descriptions of the embodiments below are merely provided to better understand the present application by illustrating examples of the present application.

The acquisition, storage, use, and processing of data in the technical solutions of the present application all comply with relevant provisions of national laws and regulations.

It should be noted that relational terms such as "first" and "second" are used merely to distinguish one entity or operation from another entity or operation, without necessarily requiring or implying any actual relationship or order between such entities or operations. Moreover, the term "include," "comprise," or any other variation thereof is intended to cover a non-exclusive inclusion, such that a process, method, article, or device that includes a list of elements does not include only those elements but also includes other elements not expressly listed, or elements inherent to such process, method, article, or device. Without further limitation, an element defined by the phrase "including" does not exclude the existence of additional identical elements in the process, method, article, or device that includes the element.

It should be understood that the term "and/or" used herein is merely a description of an association relationship of associated objects, indicating that three relationships may exist. For example, A and/or B may represent: the existence of A alone, the existence of both A and B, or the existence of B alone. In addition, the character "/" herein generally indicates an "or" relationship between the associated objects.

Various modifications and variations may be made within the gist or scope of the present application, which will be apparent to those skilled in the art. Therefore, the present application is intended to cover modifications and variations that fall within the scope of the corresponding claims and their equivalents. It should be noted that the embodiments provided in the present application may be combined with each other if there is no contradiction.

Before elaborating on the technical solutions provided by the embodiments of the present application, to facilitate understanding of the embodiments, the present application first specifically explains problems existing in related technologies.

Currently, there are mainly three implementation schemes for guiding a robot to automatically leave a docking area to perform work and automatically return to the docking area. A first scheme involves personnel manually remote controlling the robot to leave the docking area to perform work and manually remote controlling the robot to return to the docking area. A second scheme utilizes a camera to recognize markers and guide the robot for autonomous docking. A third scheme realizes autonomous docking by drawing lines on the road surface or attaching QR codes to allow the robot to move along the lines or QR codes (AGV mode).

However, the manual remote control method in the first scheme consumes a large amount of manpower, suffers from low efficiency and poor accuracy, and exhibits a low degree of automation. In the second scheme, utilizing a camera to recognize markers results in low outdoor accuracy because the camera struggles to clearly identify markers under high-light or low-light environments. In the third scheme, the method of drawing lines or attaching QR codes on the ground lacks adaptability, requiring the robot to travel strictly along predetermined routes and necessitating advance operations such as ground painting or code attachment, which is inconvenient.

To address the issues in the above related technologies, embodiments of the present application provide a robot docking method, an apparatus, a device, and a readable storage medium. First, a robot docking method provided by embodiments of the present application is detailed below.

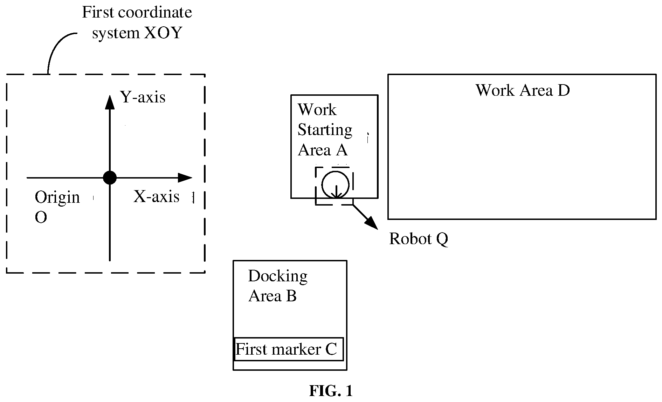

For ease of understanding the robot docking method, a schematic diagram of a robot movement area is briefly introduced. FIG. 1 is a schematic diagram of a robot movement area according to an embodiment of the present application. As shown in FIG. 1, in the present application, a movement range of a robot Q includes a work starting area A, a docking area B, and a work area D. A first marker C is disposed in the docking area B. Information of a first coordinate system XOY is established in the robot Q, specifying a spatial coordinate origin O(0,0) and directions of an X-axis and a Y-axis, so as to facilitate subsequent coordinate positioning of each area and the first marker C.

An arrow inside the robot in FIG. 1 represents a front facing direction of the robot. FIG. 1 shows the robot facing direction in the work starting area A when returning from the work starting area A to the docking area B. When the robot arrives at the docking area B, the facing direction of the robot is adjusted to face the X-axis of the first coordinate system XOY, facilitating the robot's movement to the work starting area A for security checks and other tasks. When the robot moves from the docking area B to the work starting area A, the robot faces the work area D. Certainly, postures of the robot in the work starting area A and the docking area B may be set according to specific tasks and application environments, and should be configured to different suitable states according to different tasks and application environments.

A robot docking method provided by an embodiment of the present application is detailed below.

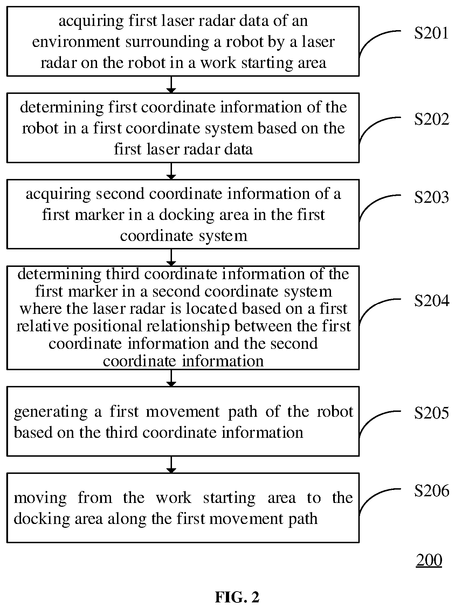

FIG. 2 is a flowchart of a robot docking method according to an embodiment of the present application. As shown in FIG. 2, the robot docking method 200 may include S201 to S206.

S201 comprises acquiring first laser radar data of an environment surrounding a robot by a laser radar on the robot in a work starting area.

S202 comprises determining first coordinate information of the robot in a first coordinate system based on the first laser radar data.

The laser radar is a radar system that emits laser beams to detect characteristic quantities such as position and speed of a target. In terms of working principle, there is no fundamental difference from microwave radar, a detection signal (laser beam) is transmitted to a target, and then a received signal (target echo) reflected back from the target is compared with a transmission signal. After appropriate processing, parameters such as target distance, azimuth, altitude, speed, attitude, and even shape can be obtained.

In the present application, the laser radar may include a 2D laser radar and a 3D laser radar. The laser radar is used to scan environment surrounding the robot to obtain first laser radar data, and the first coordinate information of a current position of the robot in the first coordinate system can be obtained by the first laser radar data.

S203 comprises acquiring second coordinate information of a first marker in a docking area in the first coordinate system.

The first marker is used to indicate a spatial position of the docking area. In some embodiments, the first marker has laser reflectivity, and a shape, a size, and a height of the first marker are adapted to a site of the docking area. The marker with laser reflectivity facilitates identification by the laser radar. A center point of the first marker has a fixed positional relationship with a center point of the docking area. By moving toward the position of the marker, the robot can move to the docking area. By the relative positional relationship between the center of the marker and the center of the docking area, the robot can move to the center of the docking area.

S203 means acquiring coordinates (Xm, Ym, Am) of the first marker in the first coordinate system as the second coordinate information, where Am is an angle between a positive direction of the first marker and the X-axis of the first coordinate system.

S204 comprises determining third coordinate information of the first marker in a second coordinate system where the laser radar is located based on a first relative positional relationship between the first coordinate information and the second coordinate information.

The second coordinate system takes a position of the laser radar as a coordinate origin. By S202 and S203, positions of the robot in the first coordinate system and the first marker in the first coordinate system are known, and the third coordinate information of the first marker with the laser radar as the coordinate origin can be calculated by the relative positional relationship therebetween.

S205 comprises generating a first movement path of the robot based on the third coordinate information.

Combining the position of the robot and the third coordinate information of the first marker, a first movement path from the position of the robot to the center of the first marker can be generated.

S206 comprises moving from the work starting area to the docking area along the first movement path.

The robot docking method provided by the embodiments of the present application utilizes the laser radar on the robot to scan the environment surrounding the robot in the work starting area, thereby determining the first coordinate information of the robot in the first coordinate system. Since the second coordinate information of the first marker in the docking area in the first coordinate system is known, the first coordinate information of the first marker can be converted into the third coordinate information with the laser radar as the coordinate origin by the first relative positional relationship between the laser radar and the first marker, thereby generating the first movement path from the coordinate origin to the laser radar. The robot can move along the movement path to move from the current work starting area to the docking area. This enables the robot to move to the docking area automatically and accurately without being limited by lighting conditions.

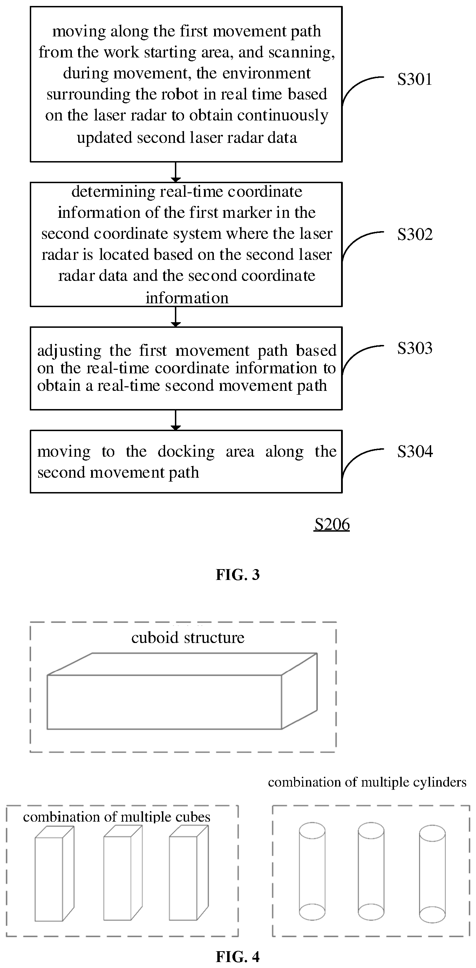

FIG. 3 is a flowchart of a robot docking method according to another embodiment of the present application. As shown in FIG. 3, in some embodiments, S206, moving from the work starting area to the docking area along the first movement path, may include S301 to S304.

S301 comprises moving along the first movement path from the work starting area, and scanning, during movement, the environment surrounding the robot in real time based on the laser radar to obtain continuously updated second laser radar data.

S302 comprises determining real-time coordinate information of the first marker in the second coordinate system where the laser radar is located based on the second laser radar data and the second coordinate information.

S303 comprises adjusting the first movement path based on the real-time coordinate information to obtain a real-time second movement path.

S304 comprises moving to the docking area along the second movement path.

S301 to S304 mean that during the movement of the robot from the work starting area to the docking area along the first movement path, the robot scans the surrounding environment in real time by the laser radar to obtain updated coordinate information of the first marker, and corrects movement deviation in real time until accurately docking at a center position of the docking area. Since the center point of the first marker has a fixed positional relationship with the center point of the docking area, the robot can move to the docking area by moving toward the position of the marker. By the relative positional relationship between the center of the marker and the center of the docking area, the robot can move to the center of the docking area.

In some embodiments, the real-time coordinate information includes an angle between a heading direction of the robot and a first coordinate axis of the first coordinate system, the first coordinate axis may be the X-axis. After S206 of moving from the work starting area to the docking area along the first movement path, the robot docking method 200 may further include step one to step two.

Step one comprises scanning the first marker by the laser radar to determine whether the docking area is reached.

Step one is performed when the robot has moved near the docking area and can scan the first marker. By scanning the first marker, it is determined whether the robot has reached the docking area based on information such as a shape and a size of the first marker.

In some embodiments, the shape of the first marker may refer to FIG. 4. As shown in FIG. 4, the first marker may be a cuboid structure, a combination of multiple cubes, or a combination of multiple cylinders. FIG. 4 is merely an example of the first marker, and the first marker may also include other shapes or structures as long as they can be recognized by the laser radar. Preferably, the first marker has good laser reflectivity, and a shape, a size, and a height of the first marker are adapted to a site of the docking area.

In some embodiments, the laser radar includes a 2D laser radar and a 3D laser radar. The 2D laser radar recognizes a cross-sectional shape of the first marker, while the 3D laser radar recognizes a spatial shape of the first marker. Both 2D and 3D radars can be used to complete the task of recognizing the first marker.

Step two comprises in a case where it is determined that the docking area is reached, adjusting the heading direction of the robot based on the real-time coordinate information.

After the robot arrives at the docking area, the heading direction of the robot is adjusted based on the coordinate information obtained at a stop point, specifically, based on an angle between the heading direction of the robot and the X-axis, generally making the front of the robot face a Y-axis direction to facilitate the robot departing to the work area for work.

In some embodiments, the robot is provided with an optical camera, and the first marker has a color and/or a pattern facilitating recognition by the optical camera. The optical camera may serve as further verification after the laser radar verifies whether it is the first marker, thereby ensuring accuracy of a verification result.

The step one of determining whether a target docking area is reached by scanning the first marker in the docking area by the laser radar, may include step three to step five.

Step three comprises scanning the first marker in the docking area by the laser radar to obtain data information of the first marker.

Step four comprises determining whether the first marker is a target marker based on the data information and a recognition result of the optical camera.

Step five comprises determining whether the docking area is reached based on the determination result.

Step three to step five involve using the laser radar to recognize the first marker while supplementing verification with the optical camera to enhance accuracy of the recognition result. It should be noted that when the optical camera is used, the first marker needs to have a color and/or a pattern facilitating recognition by the optical camera.

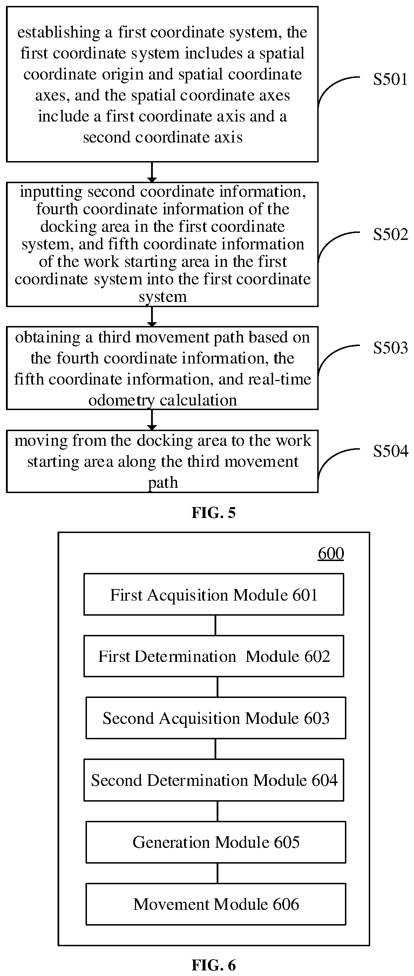

FIG. 5 is a flowchart of a robot docking method according to yet another embodiment of the present application. As shown in FIG. 5, before S201 of acquiring first laser radar data of an environment surrounding a robot by a laser radar on the robot in a work starting area, the robot docking method may further include S501 to S504.

S501 comprises establishing a first coordinate system, the first coordinate system includes a spatial coordinate origin and spatial coordinate axes, and the spatial coordinate axes include a first coordinate axis and a second coordinate axis.

Information of the first coordinate system may be viewed in combination with FIG. 1. The spatial coordinate origin is O, and the spatial coordinate axes include a first coordinate axis X and a second coordinate axis Y.

S502 comprises inputting second coordinate information, fourth coordinate information of the docking area in the first coordinate system, and fifth coordinate information of the work starting area in the first coordinate system into the first coordinate system.

The second coordinate information is coordinates (Xm, Ym, Am) of the first marker in the first coordinate system. The fourth coordinate information of the docking area in the first coordinate system may be coordinates (Xp, Yp, Ap) of a center of the docking area in the first coordinate system, where Ap is an angle between a positive direction of the robot and the X-axis when the robot docks. The fifth coordinate information of the work starting area in the first coordinate system may be coordinates (Xb, Yb, Ab) of a center position of the work starting area, where Ab is an angle between a positive direction of the robot and the X-axis when the robot moves to the work starting area and starts working.

S503 comprises obtaining a third movement path based on the fourth coordinate information, the fifth coordinate information, and real-time odometry calculation.

The third movement path is a movement path from the docking area to the work starting area. Since both the docking area and the work starting area are fixed positions, besides the step of S503, a route may also be directly formulated on the robot, and the robot may directly move from the docking area to the work starting area according to the formulated route.

S504 comprises moving from the docking area to the work starting area along the third movement path.

In some embodiments, a second marker may be disposed in the work starting area. After moving from the docking area to the work starting area along the third movement path, the robot docking method may further include step six to step eight.

Step six comprises scanning the second marker by the laser radar to determine whether the work starting area is reached.

The second marker may be used to indicate a spatial position of the work starting area. Similar to the aforementioned first marker, the second marker has laser reflectivity, and a shape, a size, and a height of the second marker are adapted to a site of the work starting area. In other embodiments, marks (lines or other patterns) may also be drawn in the work starting area, and the robot may accurately move to the work starting area by recognizing ground patterns.

Step seven comprises acquiring, in a case where it is determined that the work starting area is reached, sixth coordinate information of the robot in the first coordinate system; the sixth coordinate information includes an angle between the heading direction of the robot and the first coordinate axis.

Step eight comprises adjusting the heading direction of the robot based on the sixth coordinate information.

The heading direction of the robot is adjusted based on an angle between the front facing direction of the robot and the X-axis after the robot arrives at the work starting area, so that the robot faces the work area to facilitate the robot going to the work area for work.

Based on the same technical concept as the robot docking method provided in the above embodiments, the present application further provides a robot docking apparatus, which is referred to the following embodiments.

FIG. 6 is a structural schematic diagram of a robot docking apparatus according to an embodiment of the present application. As shown in FIG. 6, the robot docking apparatus 600 may include a first acquisition module 601, a first determination module 602, a second acquisition module 603, a second determination module 604, a generation module 605, and a movement module 606.

The first acquisition module 601 is configured to acquire first laser radar data of an environment surrounding a robot by a laser radar on the robot in a work starting area.

The first determination module 602 is configured to determine first coordinate information of the robot in a first coordinate system based on the first laser radar data.

The second acquisition module 603 is configured to acquire second coordinate information of a first marker in a docking area in the first coordinate system.

The second determination module 604 is configured to determine third coordinate information of the first marker in a second coordinate system where the laser radar is located based on a first relative positional relationship between the first coordinate information and the second coordinate information.

The generation module 605 is configured to generate a first movement path of the robot according to the third coordinate information.

The movement module 606 is configured to move from the work starting area to the docking area along the first movement path.

In some embodiments, the movement module 606 is specifically configured to move from the work starting area along the first movement path. The first acquisition module 601 is further configured to scan the environment surrounding the robot in real time by the laser radar during movement to obtain continuously updated second laser radar data. The first determination module 602 is further configured to determine real-time coordinate information of the first marker in the second coordinate system where the laser radar is located based on the second laser radar data and the second coordinate information. The generation module 605 is further configured to adjust the first movement path based on the real-time coordinate information to obtain a real-time second movement path. The movement module is further configured to move to the docking area along the second movement path.

In some embodiments, the robot docking apparatus 600 further includes a judgment module configured to scan the first marker by the laser radar to determine whether the docking area is reached. The robot docking apparatus 600 further includes an adjustment module configured to adjust the heading direction of the robot based on the real-time coordinate information in a case where it is determined that the docking area is reached.

In some embodiments, the first marker has laser reflectivity, and a shape, a size, and a height of the first marker are adapted to a site of the docking area.

In some embodiments, the robot is provided with an optical camera, and the first marker has a color and/or a pattern facilitating recognition by the optical camera. The judgment module is specifically configured to scan the first marker in the docking area by the laser radar to obtain data information of the first marker, determine whether the first marker is a target marker based on the data information and a recognition result of the optical camera, and determine whether the docking area is reached based on the determination result.

In some embodiments, the robot docking apparatus 600 further includes an establishment module and an input module. The establishment module is specifically configured to establish the first coordinate system, the first coordinate system includes a spatial coordinate origin and spatial coordinate axes, and the spatial coordinate axes include a first coordinate axis and a second coordinate axis. The input module is specifically configured to input the second coordinate information, fourth coordinate information of the docking area in the first coordinate system, and fifth coordinate information of the work starting area in the first coordinate system into the first coordinate system. The generation module 605 is further configured to obtain a third movement path based on the fourth coordinate information, the fifth coordinate information, and real-time odometry calculation. The movement module 606 is further configured to move from the docking area to the work starting area along the third movement path.

In some embodiments, a second marker is disposed in the work starting area. The judgment module is further configured to scan the second marker by the laser radar to determine whether the work starting area is reached. In a case where it is determined that the work starting area is reached, sixth coordinate information of the robot in the first coordinate system is acquired; the sixth coordinate information includes an angle between the heading direction of the robot and the first coordinate axis. The adjustment module is further configured to adjust the heading direction of the robot based on the sixth coordinate information.

Embodiments of the robot docking method, apparatus, device, and readable storage medium of the present application utilize the laser radar on the robot to scan the environment surrounding the robot in the work starting area, thereby determining the first coordinate information of the robot in the first coordinate system. Since the second coordinate information of the first marker in the docking area in the first coordinate system is known, the first coordinate information of the first marker can be converted into the third coordinate information with the laser radar as the coordinate origin by the first relative positional relationship between the laser radar and the first marker, thereby generating the first movement path from the coordinate origin to the laser radar. The robot can move along the movement path to move from the current work starting area to the docking area. This enables the robot to move to the docking area automatically and accurately without being limited by lighting conditions.

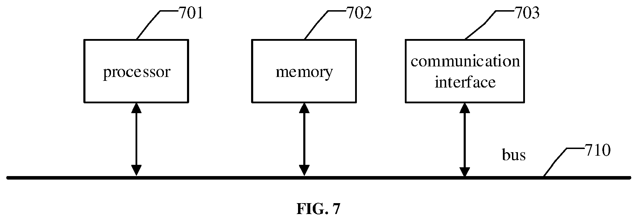

FIG. 7 is a schematic diagram of an electronic device according to an embodiment of the present application. As shown in FIG. 7, the electronic device includes a processor 701 and a memory 702 storing computer program instructions thereon.

Specifically, the processor 701 may include a central processing unit (CPU), or an application-specific integrated circuit (ASIC), or one or more integrated circuits configured to implement the embodiments of the present application.

The memory 702 may include mass storage for data or instructions. By way of example and not limitation, the memory 702 may include a hard disk drive (HDD), a floppy disk drive, flash memory, an optical disk, a magneto-optical disk, magnetic tape, or a universal serial bus (USB) drive, or a combination of two or more of these. The memory 702 may include removable or non-removable (or fixed) media. The memory 702 may be internal or external to the electronic device. In particular embodiments, the memory 702 is a non-volatile solid-state memory.

The memory may include read-only memory (ROM), random access memory (RAM), magnetic disk storage media devices, optical storage media devices, flash memory devices, electrical, optical, or other physical/tangible memory storage devices. Thus, typically, the memory includes one or more tangible (non-transitory) computer-readable storage media (e.g., memory devices) encoded with software including computer-executable instructions, and when the software is executed (e.g., by one or more processors), it is operable to perform operations described with reference to the method of the first aspect of the present application.

The processor 701 implements any one of the robot docking methods in the above embodiments by reading and executing the computer program instructions stored in the memory 702.

In one example, the electronic device may further include a communication interface 703 and a bus 710. As shown in FIG. 7, the processor 701, the memory 702, and the communication interface 703 are connected via the bus 710 and complete communication therebetween.

The communication interface 703 is mainly used to implement communication between modules, apparatuses, units, and/or devices in the embodiments of the present application.

The bus 710 includes hardware, software, or both, coupling components of the terminal service device together. By way of example and not limitation, the bus may include an accelerated graphics port (AGP) or other graphics bus, an extended industry standard architecture (EISA) bus, a front side bus (FSB), a hyper transport (HT) interconnect, an industry standard architecture (ISA) bus, an infinite bandwidth interconnect, a linear predictive coding (LPC) bus, a memory bus, a microchannel architecture (MCA) bus, a peripheral component interconnect (PCI) bus, a peripheral component interconnect-X (PCI-X) bus, a serial advanced technology attachment (SATA) bus, a VESA local bus (VLB), or a suitable combination of two or more thereof. In suitable cases, the bus 710 may include one or more buses. Although the present application describes and illustrates specific buses, the present application contemplates any suitable bus or interconnect.

The device may execute the robot docking method in the embodiments of the present application based on each unit/component in the data processing system, thereby implementing the robot docking method described in combination with FIGS. 2, 3, and 5.

In addition, in combination with the robot docking method in the above embodiments, the present application may provide a computer-readable storage medium for implementation. The computer-readable storage medium stores computer program instructions thereon; the computer program instructions, when executed by a processor, implement any one of the robot docking methods in the above embodiments.

It should be clear that the present application is not limited to the specific configurations and processes described above and shown in the figures. For brevity, detailed descriptions of known methods are omitted herein. In the above embodiments, several specific steps are described as examples. However, the method process of the present application is not limited to the specific steps described and shown, and a person skilled in the art may make various changes, modifications, and additions, or change the order between steps after understanding the gist of the present application.

The functional blocks shown in the structural block diagrams above may be implemented as hardware, software, firmware, or combinations thereof. When implemented in hardware, it may be, for example, an electronic circuit, an ASIC, a suitable firmware, a plug-in, a function card, etc. When implemented in software, elements of the present application are program or code segments used to perform required tasks. The program or code segment may be stored in a machine-readable medium or transmitted over a transmission medium or a communication link via a data signal carried in a carrier wave. A "machine-readable medium" may include any medium capable of storing or transmitting information. Examples of machine-readable media include electronic circuits, semiconductor memory devices, Read-Only Memory (ROM), flash memory, erasable read-only memory (EROM), floppy disks, Compact Disc Read-Only Memory (CD-ROM), optical disks, hard disks, fiber optic media, radio frequency (RF) links, etc. Code segments may be downloaded via a computer network such as the Internet or an intranet.

It should also be noted that the exemplary embodiments mentioned in the present application describe some methods or systems based on a series of steps or apparatuses. However, the present application is not limited to the order of the steps, that is, the steps may be executed in the order mentioned in the embodiments, or may be executed in an order different from that in the embodiments, or several steps may be executed simultaneously.

With reference to the flowcharts and/or block diagrams of methods, apparatuses (systems), and computer program products according to embodiments of the present disclosure described above, various aspects of the present disclosure are described. It should be understood that each block in the flowcharts and/or block diagrams, and combinations of blocks in the flowcharts and/or block diagrams, may be implemented by computer program instructions. These computer program instructions may be provided to a processor of a general-purpose computer, a special-purpose computer, or other programmable data processing apparatus to produce a machine, such that the instructions, when executed by the processor of the computer or other programmable data processing apparatus, enable implementation of the functions/acts specified in one or more blocks of the flowcharts and/or block diagrams. The processor may be, but is not limited to, a general-purpose processor, a special-purpose processor, an application-specific processor, or a field-programmable logic circuit. It is further understood that each block in the flowcharts and/or block diagrams, and combinations of blocks in the flowcharts and/or block diagrams, may also be implemented by dedicated hardware that performs the specified functions or acts, or by combinations of dedicated hardware and computer instructions.

The foregoing descriptions are merely specific implementations of the present application. Those skilled in the art will readily appreciate that, for convenience and brevity of description, specific working processes of the systems, modules, and units described above may refer to corresponding processes in the foregoing method embodiments, and details are not repeated herein. It should be understood that the protection scope of the present application is not limited thereto, and any person skilled in the art may readily conceive equivalent modifications or replacements within the technical scope disclosed in the present application. These modifications or substitutions shall fall within the protection scope of the present application.

## Claims

1. A robot docking method, comprising:
acquiring, in a work starting area, first laser radar data of an environment surrounding a robot by a laser radar on the robot;
determining first coordinate information of the robot in a first coordinate system based on the first laser radar data;
acquiring second coordinate information of a first marker in a docking area in the first coordinate system;
determining third coordinate information of the first marker in a second coordinate system where the laser radar is located based on a first relative positional relationship between the first coordinate information and the second coordinate information;
generating a first movement path of the robot based on the third coordinate information; and
moving from the work starting area to the docking area along the first movement path.

2. The robot docking method according to claim 1, wherein the moving from the work starting area to the docking area along the first movement path comprises:
moving along the first movement path from the work starting area, and scanning, during the moving along the first movement path from the work starting area, the environment surrounding the robot in real time by the laser radar to obtain second laser radar data updated in real time;
determining, based on the second laser radar data and the second coordinate information, real-time coordinate information of the first marker in the second coordinate system where the laser radar is located;
adjusting the first movement path based on the real-time coordinate information to obtain a real-time second movement path; and
moving to the docking area along the second movement path.

3. The robot docking method according to claim 2, wherein the real-time coordinate information comprises an angle between a heading direction of the robot and a first coordinate axis of the first coordinate system, and after the moving from the work starting area to the docking area along the first movement path, the method further comprises:
scanning the first marker by the laser radar to determine whether the docking area is reached; and
adjusting, in a case where it is determined that the docking area is reached, the heading direction of the robot based on the real-time coordinate information.

4. The robot docking method according to claim 3, wherein the first marker has laser reflectivity, and a shape, a size, and a height of the first marker are adapted to a site of the docking area.

5. The robot docking method according to claim 3, wherein the robot is provided with an optical camera, the first marker has a color and/or a pattern facilitating recognition by the optical camera, and the scanning the first marker in the docking area by the laser radar to determine whether a target docking area is reached comprises:
scanning the first marker in the docking area by the laser radar to obtain data information of the first marker;
determining whether the first marker is a target marker based on the data information and a recognition result of the optical camera; and
determining whether the docking area is reached based on the determination result.

6. The robot docking method according to claim 1, wherein before the acquiring the first laser radar data of the environment surrounding the robot by the laser radar on the robot in the work starting area, the method further comprises:
establishing the first coordinate system, wherein the first coordinate system comprises a spatial coordinate origin and spatial coordinate axes, and the spatial coordinate axes comprise a first coordinate axis and a second coordinate axis;
inputting the second coordinate information, fourth coordinate information of the docking area in the first coordinate system, and fifth coordinate information of the work starting area in the first coordinate system into the first coordinate system;
obtaining a third movement path based on the fourth coordinate information, the fifth coordinate information and real-time odometry calculation; and
moving from the docking area to the work starting area along the third movement path.

7. The robot docking method according to claim 6, wherein the work starting area is provided with a second marker, and after the moving from the docking area to the work starting area along the third movement path, the method further comprises:
scanning the second marker by the laser radar to determine whether the work starting area is reached;
acquiring, in a case where it is determined that the work starting area is reached, sixth coordinate information of the robot in the first coordinate system, wherein the sixth coordinate information comprises an angle between the heading direction of the robot and the first coordinate axis; and
adjusting the heading direction of the robot based on the sixth coordinate information.

8. A robot docking apparatus, comprising:
a first acquisition module configured to acquire, in a work starting area, first laser radar data of an environment surrounding a robot by a laser radar on the robot;
a first determination module configured to determine first coordinate information of the robot in a first coordinate system based on the first laser radar data;
a second acquisition module configured to acquire second coordinate information of a first marker in a docking area in the first coordinate system;
a second determination module configured to determine third coordinate information of the first marker in a second coordinate system where the laser radar is located based on a first relative positional relationship between the first coordinate information and the second coordinate information;
a generation module configured to generate a first movement path of the robot based on the third coordinate information; and
a movement module configured to move from the work starting area to the docking area along the first movement path.

9. An electronic device, comprising: a processor and a memory storing computer program instructions thereon,
wherein the processor is configured to execute the computer program instructions to implement the robot docking method according to any one of claims 1 to 7.

10. A computer-readable storage medium storing computer program instructions, wherein the computer program instructions, when executed by a processor, cause the processor to implement the robot docking method according to any one of claims 1 to 7.
